Europäisches Patentamt

European Patent Office

Office européen des brevets

(11) Veröffentlichungsnummer: **0 497 090 B1**

# EUROPÄISCHE PATENTSCHRIFT

(45) Veröffentlichungstag der Patentschrift: **29.03.95**

(21) Anmeldenummer: **92100091.5**

(22) Anmeldetag: **04.01.92**

(51) Int. Cl.⁶: **C03C 8/02**

(54) Nichttoxische Glasfritten.

(30) Priorität: **29.01.91 DE 4102556**

(43) Veröffentlichungstag der Anmeldung:
**05.08.92 Patentblatt 92/32**

(45) Bekanntmachung des Hinweises auf die
Patenterteilung:
**29.03.95 Patentblatt 95/13**

(84) Benannte Vertragsstaaten:
**AT BE DE ES FR GB IT NL**

(56) Entgegenhaltungen:
**EP-A- 0 294 502**
**GB-A- 2 154 573**
**GB-A- 2 158 062**

**CHEMICAL ABSTRACTS, vol. 98, no. 6, 1983,
Columbus, Ohio, US; abstract no.39568O,
Seite 294 ;Spalte 2 ;**

(73) Patentinhaber: **Degussa Aktiengesellschaft**
**Weissfrauenstrasse 9**
**D-60311 Frankturt (DE)**

(72) Erfinder: **Starz, Karl-Anton, Dr.**
**Adolf-Reichwein-Strasse 12**
**W-6458 Rodenbach (DE)**
Erfinder: **Dorbath, Bernd, Dr.**
**Kastanienweg 5**
**W-8755 Alzenau (DE)**
Erfinder: **Pitsch, Holger**
**Seligenstädter Strasse 27**
**W-6451 Mainhausen 2 (DE)**
Erfinder: **Völker, Werner, Dr.**
**Auf dem Niederberg 45**
**W-6368 Bad Vilbel (DE)**
Erfinder: **Jerke, Wilan**
**Lärchenweg 8**
**W-6369 Niederdorfelden (DE)**
Erfinder: **Dorer, Kai**
**Leibnizstrasse 47**
**W-6956 Heusenstamm (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 497 090 B1

**Beschreibung**

Die Erfindung betrifft nichttoxische Glasfritten, die frei von Bestandteilen aus Blei, Kadmium, Barium und Zink sind, eine gute Beständigkeit gegen Säuren und Alkalien aufweisen und einen Erweichungspunkt (Glasübergangstemperatur Tg) von weniger als 535 °C besitzen. Die erfindungsgemäßen Glasfritten eignen sich zum Dekorieren von Artikeln aus Glas, Glaskeramik und Keramik.

Zum Emaillieren und Dekorieren von Artikeln, wie beispielsweise Gebrauchsgeschirr, aus Glas, Glaskeramik und Keramik werden Glasfritten benötigt. Diese Glasfritten werden, ggf. vermischt mit Färbemitteln, wie Farbpigmenten, Edelmetallpräparaten oder Farbfritten, und einem organischen Bindemittel, auf die Unterlage aufgebracht und bei Temperaturen zwischen 550 und 700 °C eingebrannt.

Besonders für die Dekoration von Glasgeschirr werden Glasfritten benötigt, die einen möglichst niedrigen Erweichungspunkt besitzen, damit sich beim Einbrennen des Glasurüberzuges die Unterlage nicht verformt. Wünschenswert ist hier ein Brenntemperaturbereich von etwa 550 bis 580 °C im Normalbrand oder etwa 600 bis 630 °C im Schnellbrand. Um diese sehr niedrigen Brenntemperaturen zu erreichen, verwendet man meist Glasfritten, die merkliche Mengen von Bleioxid, Zinkoxid, Cadmiumoxid und oft auch Bariumoxid enthalten. Diese Glasbestandteile sind allerdings hochtoxisch, insbesondere wenn sie durch Einwirkung von Säuren, Alkalien oder kochendes Wasser aus der Glasurschicht herausgelöst werden. Bestimmte Staaten haben in der Zwischenzeit Gesetze erlassen, durch die die Verwendung von Blei und Cadmium in Glasuren, die zum Verzieren von Glas- und Porzellangeschirr bestimmt sind, verboten werden. Für Zinkoxid, das insbesondere im Trinkwasser unerwünscht ist, gilt ähnliches.

Man benötigt daher zum Emaillieren und Dekorieren von Haushaltsgeschirr nichttoxische Glasfritten, die einen möglichst niedrigen Erweichungspunkt (Glasübergangstemperatur Tg) besitzen und gleichzeitig sehr resistent gegen die Einwirkung von Säuren und Alkalien sind. Diese Kombination beider Eigenschaften in einer Glassorte ist nur schwer erreichbar und war in der Vergangenheit Gegenstand vieler Untersuchungen. Glasfritten mit niedriger Erweichungstemperatur sind meist nicht chemikalienbeständig und umgekehrt.

In der EP-PS 0 025 187 sind beispielsweise bleifreie Glasfritten beschrieben, die einen Erweichungspunkt unterhalb 475 °C aufweisen und auf einem Alkali-Borosilikat-Glassystem basieren. Diese Glasfritten enthalten jedoch vorzugsweise 7 bis 11 % Zinkoxid und damit eine toxische Komponente. Außerdem liegen die angegebenen Brenntemperaturen von 670 bis 680 °C viel zu hoch für den Einsatz bei Glasgeschirr. Das gleiche gilt für die bleifreien, hoch titanoxidhaltigen opaken Emaillfritten, die aus der EP-PS 0 077 219 bekannt sind und deren Brenntemperaturen bei 690 bzw. 700 °C liegen.

Weiterhin sind aus der DE-OS 34 05 708 blei- und cadmiumfreie Glasfritten bekannt, die eine gute Resistenz gegenüber Säuren und Alkalien zeigen. Die hier beschriebenen Glasfritten enthalten neben den Oxiden $SiO_2$, $B_2O_3$, $Li_2O$ und ggf. $Al_2O_3$ bestimmte Mengen Zirkondioxid und/oder Lanthanoxid sowie Zinndioxid und/oder Calciumoxid. Nachteilig ist jedoch ihr relativ hoher Erweichungspunkt, der oberhalb 535 °C bis etwa 609 °C liegt. Der hohe Schmelzpunkt dieser Glasfritten schränkt ihre Anwendungsmöglichkeit beträchtlich ein.

Eine Weiterentwicklung bezüglich der Säurebeständigkeit der vorgenannten Glasfrittenzusammensetzung wurde aus der DE-OS 35 14 749 bekannt: Diese Glasfritten enthalten je 10 bis 18 Gew.-% Zirkondioxid und Seltenerdmetalloxid, insbesondere Gemische aus $La_2O_3$ und $CeO_2$, und Zinndioxid als fakultativen Bestandteil in einer Menge von 0 bis 2 Gew.-%. Der Erweichungspunkt dieser Glasfritten wurde mit mindestens 535 °C bis 620 °C angegeben, was unerwünscht hohe Brenntemperaturen erforderlich macht.

In der EP-PS 0 294 502 sind nichttoxische Glasfritten beschrieben, die frei von Bestandteilen aus Blei, Kadmium, Barium und Zink sind, eine gute Beständigkeit gegen Säuren und Alkalien und einen Erweichungspunkt zwischen 500 °C bis 530 °C aufweisen. Die 18 bis 45 Gew.-% Zirkondioxid enthaltenden Glasfritten eignen sich für Brennzyklen 580/630 °C über 30 Minuten und 650/700 °C über 5 bis 10 Minuten.

Niedrig schmelzende, säure- und alkaliresistente Glasfritten sind schließlich auch in der JP-B 58-15043 (1983) offenbart worden: Die Glasfritten enthalten außer $SiO_2$ und $B_2O_3$ 5 bis 25 Mol-% ($TiO_2$ + $ZrO_2$), 13 bis 23 Mol-% ($Na_2O$ + $Li_2O$) sowie entweder $MoO_3$ und/oder $WO_3$ oder ein Erdalkalioxid und/oder Zinkoxid. Diese Glasfritten lassen sich bei 600 bis 620 °C innerhalb 15 Minuten einbrennen.

Aufgabe der vorliegenden Erfindung war, nichttoxische Glasfritten bereitzustellen, die frei von Bestandteilen aus Blei, Kadmium, Barium und Zink sind, eine gute Beständigkeit gegen Säuren und Alkalien und einen Erweichungspunkt (Glasübergangstemperatur Tg) von weniger als 535 °C aufweisen. Dem Fachmann sollten weitere Glasfritten zum Emaillieren und Dekorieren bei möglichst niedrigen Einbrenntemperaturen zur Vefügung gestellt werden. Insbesondere bestand Interesse an Glasfritten mit einem Erweichungspunkt unter 500 °C und gegenüber vorbekannten säure- und alkaliresistenten Glasfritten erniedrigten Brenntemperaturen.

2

Diese Aufgabe wird erfindungsgemäß dadurch gelöst, daß die Glasfritten im wesentlichen aus

20 - 40 Gew.-% Siliziumdioxid ($SiO_2$)

10 - 25 Gew.-% Boroxid ($B_2O_3$)

10 - 25 Gew.-% Zirkondioxid ($ZrO_2$)

3 - 13 Gew.-% Zinndioxid ($SnO_2$)

3 - 13 Gew.-% Lanthanoxid ($La_2O_3$) und/oder Cerdioxid ($CeO_2$)

7 - 15 Gew.-% Lithiumoxid ($Li_2O$)

0 - 10 Gew.-% Titandioxid ($TiO_2$)

0 - 10 Gew.-% Aluminiumoxid ($Al_2O_3$)

0 - 3 Gew.-% Natriumoxid ($Na_2O$)

0 - 3 Gew.-% Kaliumoxid ($K_2O$)

0 - 3 Gew.-% Magnesiumoxid (MgO)

0 - 3 Gew.-% Fluorid ($F_2$)

bestehen, die Summe aus den Oxiden $ZrO_2$, $La_2O_3$ und/oder $CeO_2$ und $SnO_2$ 30 bis 45 Gew.-% ausmacht und das Gewichtsverhältnis $La_2O_3$ und/oder $CeO_2$ zu $SnO_2$ zwischen 4 zu 1 und 1 zu 4 liegt.

Die Unteransprüche richten sich auf bevorzugte Glasfritten.

Der hohe $ZrO_2$-Gehalt der Glasfritten der EP-PS 0 294 502 ist im wesentlichen für deren hohe Chemikalienresistenz verantwortlich. Es wurde gefunden, daß der Erweichungspunkt dieser Glasfritten überraschenderweise noch weiter abgesenkt werden kann, wenn ein Teil der Zirkondioxidmenge durch die Kombination von Zinndioxid und Lanthanoxid und/oder Cerdioxid ersetzt wird. Glasfritten ohne Cerdioxid werden insbesondere dann bevorzugt, wenn eine Gelbtönung unerwünscht ist. Der kombinierte Zusatz der vorgenannten Oxide führt nur in den anspruchsgemäßen Mengen und Gewichtsverhältnissen zu der gewünschten Eigenschaftskombination. Erfindungsgemäße Glasfritten enthalten 30 bis 45 Gew.-%, vorzugsweise 32 bis 40 Gew.-%, der Oxidkombination aus $ZrO_2$, $La_2O_3$ und/oder $CeO_2$ und $SnO_2$. Liegt der Gesamtanteil der genannten Oxidkombination unter 30 Gew.-%, so sind die resultierenden Glasfritten nicht mehr ausreichend resistent gegenüber Säuren und Alkalien, liegt der Gesamtanteil jedoch über 45 Gew.-%, so sind die Glasfritten zu hochschmelzend.

Die Einhaltung eines Gewichtsverhältnisses von $La_2O_3$ und/oder $CeO_2$ zu $SnO_2$ zwischen 4 zu 1 und 1 zu 4, vorzugsweise zwischen 3 zu 1 und 1 zu 3, ist erfindungswesentlich. Ein $La_2O_3$/$SnO_2$-Verhältnis $CeO_2$-freier Glasfritten oberhalb von 4 zu 1 führt im allgemeinen zu hochschmelzenden Glasflüssen; bei Glasfritten mit einem $La_2O_3$/$SnO_2$-Verhältnis von unter 1 zu 4, beispielsweise 1 zu 5, treten jedoch aufgrund des erhöhten $SnO_2$-Anteils beim Abkühlen des Glasflusses Kristallisationserscheinungen auf.

Bevorzugte Glasfritten bestehen im wesentlichen aus 25 bis 40 Gew.-% $SiO_2$, 15 bis 25 Gew.-% $B_2O_3$, 12 bis 22 Gew.-% $ZrO_2$, 3 bis 13 Gew.-% $SnO_2$, 3 bis 13 Gew.-% $La_2O_3$, 8 bis 12 Gew.-% $Li_2O$, 0 bis 10 Gew.-% $TiO_2$, 0 bis 10 Gew.-% $Al_2O_3$, 0 bis 3 Gew.-% $Na_2O$, 0 bis 3 Gew.-% $K_2O$ und 0 bis 3 Gew.-% Fluor, wobei die Summe aus $ZrO_2$, $SnO_2$ und $La_2O_3$ 30 bis 45 Gew.-%, vorzugsweise 32 bis 40 Gew.-%, ausmacht und das Gewichtsverhältnis $La_2O_3$ zu $SnO_2$ zwischen 4 zu 1 und 1 zu 4, vorzugsweise zwischen 3 zu 1 und 1 zu 3, liegt. Unter dem Begriff "im wesentlichen" wird verstanden, daß die Glasfritten außer den genannten Oxiden in geringem Umfang, meist unter 2 Gew.-%, andere Oxide, enthalten können; bei solchen Oxiden, beispielsweise $Fe_2O_3$ und CaO, kann es sich um Verunreinigungen der Rohstoffe der wesentlichen Frittenbestandteile handeln oder um gezielt zugesetzte Stoffe, etwa färbende Oxide, zur Modifizierung der Eigenschaften der Glasfritte.

Die erfindungsgemäßen Glasfritten sind sehr resistent gegenüber Säuren und Laugen und besitzen einen Erweichungspunkt, bestimmt als Glasübergangstemperatur Tg mittels Differential-Thermo-Analyse (DTA), unter 535 °C. Bevorzugte Glasfritten weisen Tg-Werte unter 500 °C, meist solche zwischen 450 °C und 499 °C, auf.

Die niedrigen Erweichungspunkte der erfindungsgemäßen Glasfritten ermöglichen eine Absenkung der Brenntemperatur bei der Anwendung derselben zum Emaillieren und Dekorieren von Artikeln aus silikatischen und nicht-silikatischen Werkstoffen. Brennzyklen im Temperaturbereich von etwa 560 bis 580 °C bei einer Brenndauer von etwa 20 bis 40 Minuten (Normalbrand) oder im Temperaturbereich von etwa 600 bis 630 °C bei einer Brenndauer von 2 bis 10 Minuten (Schnellbrand) machen die Glasfritten hervorragend geeignet zum Dekorieren und Emaillieren von Artikeln, wie Gebrauchsgeschirr aus Glas, Glaskeramik und Keramik. Wegen ihrer niedrigen Brenntemperaturen eignen sich die erfindungsgemäßen nichttoxischen Glasfritten besonders gut zum Dekorieren von Hohlglas. Die Glasfritten können allein, beispielsweise als Deckglasur, oder gemeinsam mit Färbemitteln, etwa aus der Reihe der anorganischen Farbpigmente, Farbfritten und edelmetallhaltigen Präparate, und erforderlichen üblichen Hilfsmitteln, wie wäßrigen und/oder organischen Bindemitteln für Sieb- und andere Druckverfahren, zur Anwendung gelangen.

3

Der thermische Ausdehnungskoeffizient (WAK) der Glasfritten liegt zwischen 0 und 300 °C im Bereich von $60 \cdot 10^{-7}$ °C$^{-1}$ und $100 \cdot 10^{-7}$ °C$^{-1}$ und ist daher den Unterlagen gut angepaßt.

Die Herstellung der Glasfritten erfolgt durch Zusammenschmelzen der oxidischen Bestandteile und/oder geeigneter Vorprodukte derselben und, soweit erforderlich, Fluoride in Glasschmelzöfen bei 1150 °C bis 1300 °C, Abschrecken der Schmelze durch konventionelle Methoden, wie z. B. Eingießen in Wasser, sowie anschließendes mechanisches Zerkleinern. Besonders geeignete Einsatzstoffe zur Frittenherstellung sind: Kieselsäure, insbesondere Quarzsand; wasserfreie Borsäure; natürlich vorkommendes oder aus Zirkon gewonnenes Zirkondioxid sowie ggf. auch Zirkon selbst; Zinndioxid; Lanthanoxid, Cerdioxid oder Lanthan- und Ceroxide enthaltende Oxidgemische, wie Bastnäsit, welche weitere Seltenerdmetalloxide als Nebenbestandteile enthalten können; Lithiumcarbonat; Soda bzw. Pottasche; Titandioxid; Aluminiumoxid oder -hydroxid; Magnesiumoxid oder -carbonat; Aluminumfluorid, Kryolith oder Alkalifluorid.

Die nachfolgende Tabelle zeigt die Zusammensetzung einiger erfindungsgemäßer Glasfritten und deren Eigenschaften im Vergleich zu einer Fritte aus der EP-PS 0 294 502. Der Vergleich der Fritte 2 mit jener des Vergleichsbeispiels zeigt besonders deutlich die Überlegenheit der erfindungsgemäßen Glasfritte und den bezüglich der Erniedrigung des Erweichungspunktes überraschenden Effekt, welcher durch den Austausch eines Teils des $ZrO_2$ durch die Kombination $La_2O_3$ und $SnO_2$ erzielt wird.

**Tabelle**

| Glasfritte-Nr. | 1 | 2 | 3 | 4 | 5 | zum Vergleich: Beispiel 4 der EP-B 0 294 502 |
|---|---|---|---|---|---|---|
| $SiO_2$ (Gew.-%) | 29 | 30 | 35 | 30 | 30 | 31,2 |
| $B_2O_3$ | 20 | 20 | 18 | 18 | 22 | 21,7 |
| $ZrO_2$ | 14 | 17 | 20 | 20 | 18 | 32,0 |
| $Li_2O$ | 9 | 9 | 10 | 9 | 10 | 10,3 |
| $SnO_2$ | 12 | 5 | 10 | 10 | 4 | - |
| $La_2O_3$ | 12 | 10 | 5 | 10 | 12 | - |
| $TiO_2$ | 3 | 3 | 1 | - | 2 | 2,7 |
| $F_2$ | 1 | 1 | - | - | - | 2,0 |
| $Na_2O$ | - | - | - | 3 | 2 | - |
| $K_2O$ | - | - | 1 | - | - | - |
| $Al_2O_3$ | - | 5 | - | - | - | - |
| $ZrO_2 + La_2O_3 + SnO_2$ | 38 | 32 | 35 | 40 | 34 | 32 |
| $La_2O_3 / SnO_2$ | 1 : 1 | 2 : 1 | 1 : 2 | 1 : 1 | 3 : 1 | |
| Erweichungsbeginn (DTA) $T_g$ (°C) | 495 | 459 | 500 | 492 | 498 | 500 |
| WAK ($.10^{-7}$ °C$^{-1}$) | 85,5 | 63,8 | 97,1 | 90,5 | 92,5 | 77 |
| Resistenz (3 % HCL) | kein Angriff | kein Angriff | kein Angriff | geringer Angriff | kein Angriff | kein Angriff |
| Resistenz (10 % NaOH) | kein Angriff | kein Angriff | geringer Angriff | kein Angriff | kein Angriff | kein Angriff |

Eine Glasfritte der erfindungsgemäßen Zusammensetzung wurde in einer Kugelmühle fein gemahlen und kleiner 30 micron abgesiebt. Sodann wurde unter Verwendung eines organischen Bindemittels eine Paste hergestellt und diese mittels Siebdruckverfahren auf eine Glasscheibe aufgebracht. Die Glasscheibe wird bei 580 °C für 30 Minuten gebrannt und dann 15 Minuten einer 3 %-igen Salzsäurelösung ausgesetzt. Der Angriff der Säurelösung wurde optisch beurteilt.

Zur Bestimmung der Resistenz gegenüber Laugen wurde die Glasfritte wie zuvor auf die Glasscheibe aufgedruckt und ebenfalls bei 580 ºC gebrannt; anschließend wurde die Glasscheibe einer sechsstündigen Behandlung bei 20 ºC in einer 10 %-igen Natronlauge ausgesetzt. Der jeweilige Angriff wurde optisch beurteilt. In der Geschirrspülmaschine werden die Fritten von den üblichen Spülmitteln nicht sichtbar angegriffen.

**Patentansprüche**
**Patentansprüche für folgende Vertragsstaaten : AT, BE, DE, FR, GB, IT, NL**

1. Nichttoxische Glasfritten, die frei von Bestandteilen aus Blei, Kadmium, Barium und Zink sind, eine gute Beständigkeit gegen Säuren und Alkalien und einen Erweichungspunkt (Glasübergangstemperatur Tg) von weniger als 535 ºC aufweisen,
dadurch gekennzeichnet,
daß sie im wesentlichen aus
20 - 40 Gew.-% Siliziumdioxid ($SiO_2$)
10 - 25 Gew.-% Boroxid ($B_2O_3$)
10 - 25 Gew.-% Zirkondioxid ($ZrO_2$)
3 - 13 Gew.-% Zinndioxid ($SnO_2$)
3 - 13 Gew.-% Lanthanoxid ($La_2O_3$) und/oder Cerdioxid ($CeO_2$)
7 - 15 Gew.-% Lithiumoxid ($Li_2O$)
0 - 10 Gew.-% Titandioxid ($TiO_2$)
0 - 10 Gew.-% Aluminiumoxid ($Al_2O_3$)
0 - 3 Gew.-% Natriumoxid ($Na_2O$)
0 - 3 Gew.-% Kaliumoxid ($K_2O$)
0 - 3 Gew.-% Magnesiumoxid (MgO)
0 - 3 Gew.-% Fluorid ($F_2$)
bestehen, die Summe aus den Oxiden $ZrO_2$, $La_2O_3$ und/oder $CeO_2$ und $SnO_2$ 30 bis 45 Gew.-% ausmacht und das Gewichtsverhältnis $La_2O_3$ und/oder $CeO_2$ zu $SnO_2$ zwischen 4 zu 1 und 1 zu 4 liegt.

2. Nichttoxische Glasfritten nach Anspruch 1,
dadurch gekennzeichnet,
daß ihr Erweichungspunkt unter 500 ºC liegt.

3. Nichttoxische Glasfritten nach Anspruch 1 oder 2,
dadurch gekennzeichnet,
daß sie im wesentlichen aus
20 - 40 Gew.-%, insbesondere 25 - 40 Gew.-%, $SiO_2$
10 - 25 Gew.-%, insbesondere 15 - 25 Gew.-%, $B_2O_3$
10 - 25 Gew.-%, insbesondere 12 - 22 Gew.-%, $ZrO_2$
3 - 13 Gew.-% $SnO_2$
3 - 13 Gew.-% $La_2O_3$
7 - 15 Gew.-%, insbesondere 8 - 12 Gew.-%, $Li_2O$
0 - 10 Gew.-% $TiO_2$
0 - 10 Gew.-% $Al_2O_3$
0 - 3 Gew.-% $Na_2O$
0 - 3 Gew.-% $K_2O$
0 - 3 Gew.-% MgO
0 - 3 Gew.-% Fluorid ($F_2$)
bestehen, die Summe aus den Oxiden $ZrO_2$, $SnO_2$ und $La_2O_3$ 30 bis 45 Gew.-%, vorzugsweise 32 bis 40 Gew.-%, ausmacht und das Gewichtsverhältnis $La_2O_3$ zu $SnO_2$ zwischen 4 zu 1 und 1 zu 4 liegt.

4. Nichttoxische Glasfritten nach einem der Ansprüche 1 bis 3,
dadurch gekennzeichnet,
daß das Gewichtsverhältnis $La_2O_3$ zu $SnO_2$ zwischen 3 zu 1 und 1 zu 3 liegt.

5. Verwendung nichttoxischer Glasfritten der Ansprüche 1 bis 3 zum Emaillieren und Dekorieren von Artikeln aus Glas, Glaskeramik und Keramik, wobei die Glasfritte allein oder gemeinsam mit Färbemitteln zur Anwendung gelangt.

**Patentansprüche für folgenden Vertragsstaat : ES**

1. Verfahren zur Herstellung nichttoxischer Glasfritten, die frei von Bestandteilen aus Blei, Kadmium, Barium und Zink sind, eine gute Beständigkeit gegen Säuren und Alkalien und einen Erweichungspunkt (Glasübergangstemperatur Tg) von Weniger als 535 °C aufweisen, durch Zusammenschmelzen oxidischer Bestandteile und/oder Vorprodukten derselben und, soweit anwesend, Fluoriden bei 1150 bis 1300 °C Abschrecken der Schmelze und mechanisches Zerkleinern,
dadurch gekennzeichnet,
daß die Einsatzstoffe in einer solchen Menge eingesetzt werden, daß die Glasfritten im wesentlichen aus
20 - 40 Gew.-% Siliziumdioxid ($SiO_2$)
10-25 Gew.-% Boroxid ($B_2O_3$)
10 - 25 Gew.-% Zirkondioxid ($ZrO_2$)
3 - 13 Gew.-% Zinndioxid ($SnO_2$)
3 - 13 Gew.-% Lanthanoxid ($La_2O_3$) und/oder Cerdioxid ($CeO_2$)
7 - 15 Gew.-% Lithiumoxid ($Li_2O$)
0 - 10 Gew.-% Titandioxid ($TiO_2$)
0 - 10 Gew.-% Aluminiumoxid ($Al_2O_3$)
0 - 3 Gew.-% Natriumoxid ($Na_2O$)
0 - 3 Gew.-% Kaliumoxid ($K_2O$)
0 - 3 Gew.-% Magnesiumoxid (MgO)
0 - 3 Gew.-% Fluorid ($F_2$)
bestehen, die Summe aus den Oxiden $ZrO_2$, $La_2O_3$ und/oder $CeO_2$ und $SnO_2$ 30 bis 45 Gew.-% ausmacht und das Gewichtsverhältnis $La_2O_3$ und/oder $CeO_2$ zu $SnO_2$ zwischen 4 zu 1 und 1 zu 4 liegt.

2. Verfahren zur Herstellung nichttoxischer Glasfritten nach Anspruch 1,
dadurch gekennzeichnet,
daß die Einsatzstoffe in einer solchen Menge eingesetzt werden, daß der Erweichungspunkt der erhaltenen Glasfritten unter 500 °C liegt.

3. Verfahren zur Herstellung nichttoxischer Glasfritten nach Anspruch 1 oder 2,
dadurch gekennzeichnet,
daß die Einsatzstoffe in einer solchen Menge eingesetzt werden, daß die Glasfritten im wesentlichen aus
20-40 Gew.-%, insbesondere 25-40 Gew.-%, $SiO_2$
10-25 Gew.-%, insbesondere 15-25 Gew.-%, $B_2O_3$
10-25 Gew.-%, insbesondere 12-22 Gew.-%, $ZrO_2$
3-13 Gew.-% $SnO_2$
3-13 Gew.-% $La_2O_3$
7-15 Gew.-%, insbesondere 8-12 Gew.-%, $Li_2O$
0-10 Gew.-% $TiO_2$
0-10 Gew.-% $Al_2O_3$
0- 3 Gew.-% $Na_2O$
0 - 3 Gew.-% $K_2O$
0- 3 Gew.-% MgO
0 - 3 Gew.-% Fluorid ($F_2$)
bestehen, die Summe aus den Oxiden $ZrO_2$, $SnO_2$ und $La_2O_3$ 30 bis 45 Gew.-%, vorzugsweise 32 bis 40 Gew.-%, ausmacht und das Gewichtsverhältnis $La_2O_3$ zu $SnO_2$ zwischen 4 zu 1 und 1 zu 4 liegt.

4. Verfahren zur Herstellung nichttoxischer Glasfritten nach einem der Ansprüche 1 bis 3,
dadurch gekennzeichnet,
daß das Gewichtsverhältnis $La_2O_3$ zu $SnO_2$ zwischen 3 zu 1 und 1 zu 3 liegt.

5. Verwendung nichttoxischer Glasfritten, erhalten nach dem Verfahren der Ansprüche 1 bis 3, zum Emaillieren und Dekorieren von Artikeln aus Glas, Glaskeramik und Keramik, wobei die Glasfritte allein oder gemeinsam mit Färbemitteln zur Anwendung gelangt.

**Claims**
**Claims for the following Contracting States : AT, BE, DE, FR, GB, IT, NL**

1.  Non-toxic glass frits, which are free from lead, cadmium, barium and zinc components and have a good resistance to acids and alkalis and a softening point (glass transition temperature Tg) of less than 535°C,
    characterised in that
    they consist essentially of
    20-40% by weight of silicon dioxide ($SiO_2$)
    10-25% by weight of boric oxide ($B_2O_3$)
    10-25% by weight of zirconium oxide ($ZrO_2$)
    3-13% by weight of stannic oxide ($SnO_2$)
    3-13% by weight of lanthanum oxide ($La_2O_3$) and/or ceric oxide ($CeO_2$)
    7-15% by weight of lithium oxide ($Li_2O$)
    0-10% by weight of titanium dioxide ($TiO_2$)
    0-10% by weight of aluminium oxide ($Al_2O_3$)
    0- 3% by weight of sodium oxide ($Na_2O$)
    0- 3% by weight of potassium oxide ($K_2O$)
    0- 3% by weight of magnesium oxide (MgO)
    0- 3% by weight of fluoride ($F_2$)
    the sum of the oxides $ZrO_2$, $La_2O_3$ and/or $CeO_2$ and $SnO_2$ amounts to 30 to 45% by weight and the weight ratio of $La_2O_3$ and/or $CeO_2$ to $SnO_2$ is between 4 to 1 and 1 to 4.

2.  Non-toxic glass frits according to claim 1,
    characterised in that
    the softening point thereof is below 500°C.

3.  Non-toxic glass frits according to claim 1 or 2,
    characterised in that
    they consist essentially of
    20-40% by weight, particularly 25-40% by weight of $SiO_2$
    10-25% by weight, particularly 15-25% by weight of $B_2O_3$
    10-25% by weight, particularly 12-22% by weight of $ZrO_2$
    3-13% by weight of $SnO_2$
    3-13% by weight of $La_2O_3$
    7-15% by weight, particularly 8-12% by weight of $Li_2O$
    0-10% by weight of $TiO_2$
    0-10% by weight of $Al_2O_3$
    0- 3% by weight of $Na_2O$
    0- 3% by weight of $K_2O$
    0- 3% by weight of MgO
    0- 3% by weight of fluoride ($F_2$)
    the sum of the oxides $ZrO_2$, $SnO_2$ and $La_2O_3$ amounts to 30 to 45% by weight, preferably 32 to 40% by weight and the weight ratio of $La_2O_3$ to $SnO_2$ is between 4 to 1 and 1 to 4.

4.  Non-toxic glass frits according to one of claims 1 to 3,
    characterised in that
    the weight ratio of $La_2O_3$ to $SnO_2$ is between 3 to 1 and 1 to 3.

5.  Use of non-toxic glass frits according to claims 1 to 3 for the enamelling and decoration of articles made of glass, glass ceramic and ceramic, wherein the glass frit is used alone or combined with colorants.

**Claims for the following Contracting State : ES**

1.  Process for the production of non-toxic glass frits, which are free from lead, cadmium, barium and zinc components and have a good resistance to acids and alkalis and a softening point (glass transition temperature Tg) of less than 535°C, by melting together oxide components and/or intermediate products of the same and, as far as they are present, fluorides at 1150 to 1300°C, rapid cooling of the melt and mechanical grinding,
characterised in that
the charge is used in a quantity such that the glass frits consist essentially of
20-40% by weight of silicon dioxide ($SiO_2$)
10-25% by weight of boric oxide ($B_2O_3$)
10-25% by weight of zirconium oxide ($ZrO_2$)
3-13% by weight of stannic oxide ($SnO_2$)
3-13% by weight of lanthanum oxide ($La_2O_3$) and/or ceric oxide ($CeO_2$)
7-15% by weight of lithium oxide ($Li_2O$)
0-10% by weight of titanium dioxide ($TiO_2$)
0-10% by weight of aluminium oxide ($Al_2O_3$)
0- 3% by weight of sodium oxide ($Na_2O$)
0- 3% by weight of potassium oxide ($K_2O$)
0- 3% by weight of magnesium oxide (MgO)
0- 3% by weight of fluoride ($F_2$)
the sum of the oxides $ZrO_2$, $La_2O_3$ and/or $CeO_2$ and $SnO_2$ amounts to 30 to 45% by weight and the weight ratio of $La_2O_3$ and/or $CeO_2$ to $SnO_2$ is between 4 to 1 and 1 to 4.

2. Process for the production of non-toxic glass frits according to claim 1,
characterised in that
the charge is used in a quantity such that the softening point of the glass frits obtained is below 500°C.

3. Process for the production of non-toxic glass frits according to claim 1 or 2,
characterised in that
the charge is used in a quantity such that the glass frit consists essentially of
20-40% by weight, particularly 25-40% by weight of $SiO_2$
10-25% by weight, particularly 15-25% by weight of $B_2O_3$
10-25% by weight, particularly 12-22% by weight of $ZrO_2$
3-13% by weight of $SnO_2$
3-13% by weight of $La_2O_3$
7-15% by weight, particularly 8-12% by weight of $Li_2O$
0-10% by weight of $TiO_2$
0-10% by weight of $Al_2O_3$
0- 3% by weight of $Na_2O$
0- 3% by weight of $K_2O$
0- 3% by weight of MgO
0- 3% by weight of fluoride ($F_2$)
the sum of the oxides $ZrO_2$, $SnO_2$ and $La_2O_3$ amounts to 30 to 45% by weight, preferably 32 to 40% by weight and the weight ratio of $La_2O_3$ to $SnO_2$ is between 4 to 1 and 1 to 4.

4. Process for the production of non-toxic glass frits according to one of claims 1 or 3,
characterised in that
the weight ratio of $La_2O_3$ to $SnO_2$ is between 3 to 1 and 1 to 3.

5. Use of non-toxic glass frits, obtained by the process according to claims 1 to 3, for the enamelling and decoration of articles made of glass, glass ceramic and ceramic, wherein the glass frit is used alone or combined with colorants.

**Revendications**
**Revendications pour les Etats contractants suivants : AT, BE, DE, FR, GB, IT, NL**

1. Frittes de verre non toxiques, qui sont dépourvues de constituants choisis parmi le plomb, le cadmium, le baryum et le zinc, qui possèdent une bonne stabilité vis-à-vis des acides et des alcalis, et un point de ramollissement (température de transition du verre Tg) de moins de 535°C caractérisées en ce qu'elles sont constituées essentiellement de :
20 - 40 % en poids de dioxyde de silicium ($SiO_2$)
10 - 25 % en poids d'oxyde de bore ($B_2O_3$)

9

10 - 25 % en poids de dioxyde de zirconium ($ZrO_2$)

3 - 13 % en poids de dioxyde d'étain ($SnO_2$)

3 - 13 % en poids d'oxyde de lanthane ($La_2O_3$) et/ou de dioxyde de cérium ($CeO_2$)

7 - 15 % en poids d'oxyde de lithium ($Li_2O$)

0 - 10 % en poids d'oxyde d'aluminium ($Al_2O_3$)

0 - 3 % en poids d'oxyde de sodium ($Na_2O$)

0 - 3 % en poids d'oxyde de potassium ($K_2O$)

0 - 3 % en poids d'oxyde de magnésium (MgO)

0 - 3 % en poids de fluorures ($F_2$)

la somme des oxydes $ZrO_2$, $La_2O_3$ et/ou $CeO_2$ et $SnO_2$ représente 30 à 45 % en poids et le rapport pondéral $La_2O_3$ et/ou $CeO_2$ a $SnO_2$ se situe entre 4 pour 1 et 1 pour 4.

2. Frittes de verre non toxiques selon la revendication 1, caractérisées en ce que leur point de ramollissement se situe en dessous de 500°C.

3. Frittes de verre non toxiques selon la revendication 1 ou la revendication 2, caractérisées en ce qu'elles sont constituées essentiellement de :

20 - 40 % en poids de dioxyde de silicium ($SiO_2$)

10 - 25 % en poids d'oxyde de bore ($B_2O_3$)

10 - 25 % en poids de dioxyde de zirconium ($ZrO_2$)

3 - 13 % en poids de dioxyde d'étain ($SnO_2$)

3 - 13 % en poids d'oxyde de lanthane ($La_2O_3$)

7 - 15 % en poids d'oxyde de lithium ($Li_2O$)

.O - 10 % en poids d'oxyde de titane ($TiO_2$) en particulier 8-12

0 - 10 % en poids d'oxyde d'aluminium ($Al_2O_3$)

0 - 3 % en poids d'oxyde de sodium ($Na_2O$)

0 - 3 % en poids d'oxyde de potassium ($K_2O$)

0 - 3 % en poids d'oxyde de magnésium (MgO)

0 - 3 % en poids de fluorures ($F_2$)

la somme des oxydes $ZrO_2$, $La_2O_3$, $SnO_2$ $ceO_2$ et $La_2O_3$ représente 30 à 45 % en poids de préférence de 32 à 40 % en poids et le rapport pondéral $La_2O_3$ et/ou $CeO_2$ à $SnO_2$ se situe entre 4 pour 1 et 1 pour 4.

4. Frittes de verre non toxiques selon l'une des revendications 1 à 3, caractérisées en ce que le rapport en poids $La_2O_3$ ou $SnO_2$ se situe entre 3 pour 1 et 1 pour 3.

5. Utilisation des frittes de verre non toxiques des revendications 1 à 3 pour l'émaillage et la décoration d'articles en verre, en céramique de verre et en céramique, pour lesquelles les frittes de verre parviennent à l'utilisation seules ou conjointement avec des colorants.

**Revendications pour l'Etat contractant suivant : ES**

1. Procédé d'obtention de frittes de verre non toxiques qui sont dépourvues de constituants choisis parmi le plomb, le cadmium, le baryum et le zinc, qui possèdent une bonne stabilité vis-à-vis des acides et des alcalis, et un point de ramollissement (température de transition du verre Tg) de moins de 535°C, par fusion conjointe de constituants d'oxydation et/ou de produits précurseurs de ceux-ci et pour autant qu'ils soient présents, des fluorures, refroidissement à 1 150 à 1 300°C du produit de fusion et broyage mécanique, caractérisé en ce que les substances utilisées sont mises en oeuvre en quantités telles que les frittes de verre consistent essentiellement en :

20 à 40 % en poids de dioxyde de silicium ($SiO_2$)

10 à 25 % en poids d'oxyde de bore ($B_2O_3$)

10 à 25 % en poids de dioxyde de zirconium ($ZrO_2$)

3 à 13 % en poids de dioxyde d'étain ($SnO_2$)

3 à 13 % en poids d'oxyde de lanthane ($La_2O_3$) et/ou de dioxyde de cérium ($CeO_2$)

7 à 15 % en poids d'oxyde de lithium ($Li_2O$)

0 à 10 % en poids d'oxyde de titane ($TiO_2$)

0 à 10 % en poids d'oxyde d'aluminium ($Al_2O_3$)

0 à 3 % en poids d'oxyde de sodium ($Na_2O$)

0 à 3 % en poids d'oxyde de potassium ($K_2O$)
0 à 3 % en poids d'oxyde de magnésium (MgO)
0 à 3 % en poids de fluorures ($F_2$)
la somme des oxydes $ZrO_2$, $La_2O_3$ et/ou $CeO_2$ et $SnO_2$ représente 30 à 45 % en poids et le rapport pondéral $La_2O_3$ et/ou $CeO_2$ à $SnO_2$ se situe entre 4 pour 1 et 1 pour 4.

2. Procédé d'obtention de frittes de verre non toxiques selon la revendication 1, caractérisé en ce que les substances utilisées sont mises en oeuvre en quantités telles que le point de ramollissement des frittes de verre obtenues se situe en dessous de 500°C.

3. Procédé d'obtention de frittes de verre non toxiques selon la revendication 1 ou 2, caractérisé en ce que les substances utilisées sont mises en oeuvre en quantités telles que les frittes de verre sont formées essentiellement de :
20 à 40 % en poids en particulier de 25 à 40 % en poids de $SiO_2$
10 à 25 % en poids en particulier de 15 à 25 % en poids de $B_2O_3$
10 à 25 % en poids en particulier de 12 à 22 % en poids de $ZrO_2$
3 à 13 % de $SnO_2$
3 à 13 % de $La_2O_3$
7 à 15 % en poids en particulier de 8 à 12 % en poids de $Li_2O$
O à 10 % en poids de $TiO_2$
0 à 10 % en poids de $Al_2O_3$
0 à 3 % en poids de $Na_2O$
0 à 3 % en poids de $K_2O$
0 à 3 % en poids de MgO
20 à 3 % en poids de fluorures ($F_2$)
la somme des oxydes $ZrO_2$, $SnO_2$ et $La_2O_3$ représente 30 à 45 % en poids de préférence de 32 à 40 % en poids et le rapport pondéral $La_2O_3$ à $SnO_2$ se situe entre 4 pour 1 et 1 pour 4.

4. Procédé d'obtention de frittes de verre non toxiques selon l'une des revendications 1 à 3, caractérisé en ce que le rapport pondéral $La_2O_3$ ou $SnO_2$ se situe entre 3 pour 1 et 1 pour 3.

5. Utilisation des frittes de verre non toxiques obtenues selon le procédé des revendications 1 à 3, en vue de l'émaillage et de la décoration d'articles en verre, céramique de verre et céramique pour lesquelles les frittes de verre seules ou conjointement avec des agents colorants parviennent à l'utilisation.